# EUROPEAN PATENT APPLICATION

(11) **EP 4 838 636 A1**
(43) Date of publication of application: **11.11.2026**
(21) Application number: 24930375.1
(22) Date of filing: 11.09.2024
(51) Int. Cl.: H01M 50/103, H01M 50/30, H01M 50/209, H01M 50/333, H01M 50/655

(54) **BATTERY CELL, BATTERY, AND ELECTRICAL APPARATUS**

(30) Priority: 19.03.2024 CN 202420529789 U
(71) Applicant: Contemporary Amperex Technology Co., Limited, Ningde, Fujian 352100 (CN)
(72) Inventor: LONG, Zhen, Ningde, Fujian 352100 (CN); MA, Qisheng, Ningde, Fujian 352100 (CN); HUANG, Caixia, Ningde, Fujian 352100 (CN); LIU, Yangyang, Ningde, Fujian 352100 (CN)
(74) Representative: Ziebig Hengelhaupt Intellectual Property Attorneys Patentanwaltskanzlei PartGmbB
(86) International application number: PCT/CN2024/118238
(87) International publication number: WO 2025/194715

(57) **Abstract**

A battery cell, a battery (2), and an electrical apparatus. The battery cell comprises a housing (10), a first valve (20), and a second valve (30). The housing (10) is provided with a liquid injection hole (11) and a gas release hole (12), one of the first valve (20) and the second valve (30) being disposed at the liquid injection hole (11), and the other of the first valve (20) and the second valve (30) being disposed at the gas release hole (12). The first valve (20) and the second valve (30) are both configured to be capable of switching between connecting and disconnecting the internal space of the housing (10) and the external space of the housing (10).

## Description

### CROSS-REFERENCE TO RELATED APPLICATIONS

The present application claims priority to Chinese Patent Application No. 202420529789.9 filed on March 19, 2024 and entitled "BATTERY CELL, BATTERY, AND ELECTRICAL APPARATUS", which is incorporated herein by reference in its entirety.

### TECHNICAL FIELD

The present application relates to the technical field of batteries, and in particular to a battery cell, a battery, and an electrical apparatus.

### BACKGROUND

With the development of new energy technologies, batteries are increasingly more widely applied, for example, applied in mobile phones, laptops, electric bicycles, electric cars, electric airplanes, electric ships, electric toy cars, electric toy ships, electric toy airplanes, electric tools, and the like.

In a production process of battery cells, the external environment has a significant impact on the production quality of battery cells. Strict control of the external environment is usually required to reduce the risk of battery cell scrap. However, the strict control of the external environment will also increase the overall production cost of battery cells. Therefore, how to effectively reduce the impact of the external environment on the battery cell in the production process is an urgent problem to be solved in the battery technologies.

### SUMMARY OF THE INVENTION

In view of the above problems, the present application provides a battery cell, a battery, and an electrical apparatus, which can reduce the impact of the external environment on the battery cell in the production process to improve the production quality and reduce costs.

In a first aspect, embodiments of the present application provide a battery cell, and the battery cell includes a shell, a first valve, and a second valve. The shell is provided with a liquid injection hole and an exhaust vent. One of the first valve and the second valve is arranged at the liquid injection hole, and the other of the first valve and the second valve is arranged at the exhaust vent. Both the first valve and the second valve are configured to be capable of switching between connecting and disconnecting an internal space of the shell and an external space of the shell.

The above technical solution is capable of opening the first valve and/or the second valve when the battery cell is undergoing a processing step that requires communication between the internal space of the shell and the external space of the shell to complete a relevant operation, so as to provide an operating condition for the processing step of the battery cell; and closing the first valve and/or the second valve when the battery cell is not being processed or when the battery cell is undergoing a processing step that does not require communication between the internal space of the shell and the external space of the shell to complete a relevant operation, so as to isolate the interior of the battery cell from interaction with the external environment, reduce the impact of the external environment on an internal structure and component of the battery cell caused by the interaction between the external environment and the internal space of the shell through the liquid injection hole and the exhaust vent, thereby helping improve the production quality. At the same time, since the impact of the external environment on battery cells in the production process is reduced, control standards for the external environment can be lowered or the control of the external environment can be eliminated, which helps reduce the production costs.

Furthermore, structures of the first valve and the second valve can be designed differently according to different structures of the liquid injection hole and the exhaust vent, so as to better meet process requirements of liquid injection and venting, thereby being conducive to further improving the production quality.

In some embodiments of the first aspect, the shell includes a first wall and a second wall, where the exhaust vent is provided on the first wall and the liquid injection hole is provided on the second wall.

By providing the exhaust vent and the liquid injection hole on the first wall and the second wall respectively, on the one hand, a space for arranging the first valve and the second valve can be increased, which is conducive to reducing the difficulty of arranging the first valve and the second valve; on the other hand, it is further conducive to maintaining structural stability and balance of the shell, thereby improving overall reliability of the battery cell.

In some embodiments of the first aspect, the first wall and the second wall are arranged opposite to each other. This is further capable of improving overall structural balance of the shell.

In some embodiments of the first aspect, the shell includes an end cover and a case. The case is provided with an opening, the end cover covers the opening, and the end cover is configured as the first wall. The case includes the second wall, where the second wall is arranged opposite to the end cover.

The above technical solution can not only improve a gas discharge efficiency in the processing steps of the battery cell that require venting, but also effectively reduce the risk of electrolyte solution contamination of the battery cell in a liquid injection process of the battery cell.

In some embodiments of the first aspect, the first valve includes a first main body portion and a first core portion, the first main body portion including a first port and a second port that are in communication with each other, the first port being in communication with the external space, and the second port being in communication with the internal space. The first core portion is arranged in the first main body portion. The first core portion is configured to be capable of opening when subjected to a pressure, so that the first port and the second port are in communication with each other, and be capable of isolating the first port from the second port when not subjected to any pressure.

The above technical solution sets the first valve as a press-type valve. During opening and closing of the first valve, the first core portion moves in a direction close to the internal space of the shell, which can significantly reduce requirements for the external operating space of the battery cell and help adapt to more processing steps of the battery cell. In addition, the first valve is opened by pressing, so that the operation is more convenient and the production efficiency of the battery cell can be effectively improved.

In some embodiments of the first aspect, the first valve further includes a first elastic body, where the first elastic body connects the first main body portion and the first core portion, and the first elastic body applies a force to the first core portion in a direction close to the first port.

The above technical solution provides a preset force to the first core portion by arranging the first elastic body. This not only simplifies the structure and helps reduce the manufacturing cost of the first valve, but also allows for flexible adjustment of the shape, size, and material of the first elastic body according to different application environments and requirements, thereby being conducive to improving the design flexibility and applicability of the first valve.

In some embodiments of the first aspect, the first elastic body is arranged on a side of the first core portion facing away from the first port.

Compression of the first elastic body makes a volume of the first elastic body relatively small, thus being capable of reducing an occupancy rate of the first elastic body for an internal space in the first valve. Therefore, it is capable of freeing up more space within the first valve for functions such as conveying an electrolyte solution or gas during the processing of battery cell, thereby improving the production efficiency of the battery cell.

In some embodiments of the first aspect, the first main body portion further includes a cavity, and the cavity is in communication with the first port and the second port. The first core portion includes a body and a protruding portion connected to each other. The protruding portion protrudes from a surface of a side of the body near the first port. The body is arranged in the cavity, and the surface of the side of the body near the first port abuts against the first main body portion. At least a portion of the protruding portion is accommodated in the first port.

The above technical solution is capable of improving the sealing performance when the first valve is in the closed state, thereby reducing impact of external environmental factors on the battery cell in the production process, and further improving the production quality.

In some embodiments of the first aspect, the second valve includes a second main body portion and a second core portion, the second main body portion including a third port and a fourth port that are in communication with each other, the third port being in communication with the internal space. The second core portion is arranged in the second main body portion. A portion of the second core portion passes through the fourth port and extends out of the shell. The second core portion is provided with a channel, and the channel is in communication with the external space. The second core portion is configured to be capable of opening when subjected to a tensile force so that the third port and the channel are in communication with each other, and be capable of isolating the third port from the channel when not subjected to any tensile force.

The above technical solution sets the second valve as a pull-type valve. During opening and closing of the second valve, the second core portion moves in a direction away from the internal space of the shell. It is capable of reducing the risk of the second core portion falling out into the internal space of the shell during the movement, thereby being conducive to improving the reliability of the battery cell.

In some embodiments of the first aspect, the second valve further includes a second elastic body, where the second elastic body connects the second main body portion and the second core portion, and the second elastic body applies a force to the second core portion in a direction away from the fourth port.

The above technical solution provides a preset force to the second core portion by arranging the second elastic body. This not only simplifies the structure and helps reduce the manufacturing cost of the second valve, but also allows for flexible adjustment of the shape, size, and material of the second elastic body according to different application environments and requirements, thereby being conducive to improving the design flexibility and applicability of the second valve.

In some embodiments of the first aspect, the second elastic body is arranged on a side of the second core portion close to the fourth port.

Compression of the second elastic body makes a volume of the second elastic body relatively small, thus being capable of reducing an occupancy rate of the second elastic body for an internal space in the second valve. Therefore, it is capable of freeing up more space within the second valve for functions such as conveying an electrolyte solution or gas during the processing of battery cell, thereby improving the production efficiency of the battery cell.

In some embodiments of the first aspect, the second valve further includes an anti-slip member, where the anti-slip member is connected to the part of the second core portion that extends out of the shell.

The above technical solution provides the anti-slip member, and the anti-slip member is capable of improving a friction coefficient of the part of the second core portion that protrudes from the shell, thereby reducing the risk of slippage after an operator or a device grasps the second core portion, and thus improving the reliability of the second valve.

In a second aspect, the present application provides a battery which includes the battery cell provided by any one of embodiments in the first aspect.

In a third aspect, the present application provides an electrical apparatus, including the battery cell provided in any one of embodiments in the first aspect, where the battery cell is configured to provide electric energy.

The above illustrations are merely brief descriptions for the technical solutions of the present application. Specific implementation manners of the present application are described specifically in the following to understand the technical solutions of the present application more clearly and implement the present application according to content of the specification, and to make the above and other objectives, features and advantages of the present application more comprehensible.

### DESCRIPTION OF DRAWINGS

By reading the detailed description of the preferred embodiments below, various other advantages and benefits will become apparent to those of ordinary skill in the art. The drawings are used for the purpose of illustrating the preferred embodiments only and are not to be considered a limitation to the present application. Moreover, throughout the drawings, like reference numerals represent like components. In the drawings:
FIG. 1 is a schematic structural view of a vehicle according to some embodiments of the present application;
FIG. 2 is a schematic exploded structural view of a battery according to some embodiments of the present application;
FIG. 3 is a schematic structural view of a battery module according to some embodiments of the present application;
FIG. 4 is a schematic structural view of a battery cell according to some embodiments of the present application;
FIG. 5 is a schematic structural top view of the battery cell shown in FIG. 4;
FIG. 6 is a schematic sectional structural view of the battery cell shown in FIG. 5 along A-A when a first valve and a second valve are in a closed state;
FIG. 7 is a schematic partial enlarged structural view of a place D in FIG. 6;
FIG. 8 is a schematic partial enlarged structural view of a place F in FIG. 6;
FIG. 9 is a schematic sectional structural view of the battery cell shown in FIG. 5 along A-A when a first valve and a second valve are in an opening state;
FIG. 10 is a schematic partial enlarged structural view of a place G in FIG. 9; and
FIG. 11 is a schematic partial enlarged structural view of a place H in FIG. 9.

Reference numerals in the Detailed Description are as follows:
1. Vehicle; 2. Battery; 3. Controller; 4. Motor; 5. Box body; 5a. First box body part; 5b. Second box body part; 5c. Accommodating space; 6. Battery module; 7. Battery cell;
10. Shell; 10a. Case; 10b. End cover; 11. Liquid injection hole; 12. Exhaust vent; 13. First wall; 14. Second wall; 20. First valve; 21. First main body portion; 211. First port; 212. Second port; 213. Cavity; 22. First core portion; 221. Body; 222. Protruding portion; 23. First elastic body; 30. Second valve; 31. Second main body portion; 311. Third port; 312. Fourth port; 32. Second core portion; 321. Channel; 33. Second elastic body; 34. Anti-slip member.

### DETAILED DESCRIPTION

For the objects, technical solutions and advantages of the embodiments of the present application to be clearer, the technical solutions in the embodiments of the present application will be clearly and completely described below in conjunction with the drawings in the embodiments of the present application, and it is apparent that the described embodiments are some, rather than all, of the embodiments of the present application. All other embodiments obtained by those of ordinary skill in the art based on the embodiments of the present application without involving any creative effort shall fall within the scope of protection of the present application.

Unless otherwise defined, all technical and scientific terms used in the present application shall have the same meanings as those generally understood by those skilled in the technical field to which the present application belongs. The terms used in the specification of the present application are merely for the purpose of describing specific embodiments and are not intended to limit the present application. The terms "include" and "have" and any variations thereof in the specification and claims of the present application and the above Description of Drawings are intended to cover non-exclusive inclusion. The terms "first," "second," etc. in the specification and the claims of the present application as well as the above drawings are used to distinguish different objects, rather than to describe a specific order or primary-secondary relationship.

Reference in the present application to an "embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that the terms "mounting," "connecting," "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is merely an association that describes the associated object, indicating that there can be three kinds of relationships, for example, A and/or B may denote the following three situations: A exists alone, A and B exist at the same time, and B exists alone. In addition, the character "/" in the present application generally means that the associated objects before and after it are in an "or" relationship.

In the embodiments of the present application, the same reference numerals denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

"A plurality of" appearing in the present application means two or more (including two).

The term "parallel" in the present application includes not only absolute parallel cases, but also approximately parallel cases that are conventionally known in engineering; moreover, "perpendicular" also includes not only absolute perpendicular cases, but also approximately perpendicular cases that are conventionally known in engineering.

In the embodiments of the present application, the battery cell can be a secondary battery cell. The secondary battery cell refers to a battery cell that, after being discharged, can activate an active material by charging for continued use.

The battery cell can be a lithium-ion battery cell, a sodium-ion battery cell, a sodium/lithium-ion battery cell, a lithium metal battery cell, a sodium metal battery cell, a lithium-sulfur battery cell, a magnesium-ion battery cell, a nickel-metal hydride battery cell, a nickel-cadmium battery cell, a lead storage battery cell, etc., which is not limited in the embodiments of the present application.

The battery cell generally includes an electrode assembly. The electrode assembly includes a positive electrode and a negative electrode. During charging and discharging of the battery cell, active ions (such as lithium ions) are intercalated and deintercalated back and forth between the positive electrode and the negative electrode.

In some embodiments, the electrode assembly further includes a spacer. The spacer is arranged between the positive electrode and the negative electrode, and functions to prevent a short circuit between the positive electrode and the negative electrode while enabling the active ions to pass through.

In some embodiments, the positive electrode may be a positive electrode plate, and the positive electrode plate may include a positive electrode current collector and a positive electrode active material layer arranged on at least one surface of the positive electrode current collector.

For example, the positive electrode current collector has two surfaces opposite to each other in a thickness direction of the positive electrode current collector. The positive electrode active material layer is arranged on either or both of the two opposite surfaces of the positive electrode current collector.

As an example, the positive electrode current collector may be a metal foil or a composite current collector. For example, as the metal foil, stainless steel, copper, aluminum, nickel, silver-plated aluminum, silver-plated stainless steel, carbon electrode, carbon, nickel, or titanium may be adopted. The composite current collector can include a polymer material substrate layer and a metal layer. The composite current collector can be formed by forming a metal material (aluminum, aluminum alloys, nickel, nickel alloys, titanium, titanium alloys, silver, silver alloys, and the like) on a polymer material substrate (such as polypropylene, polyethylene terephthalate, polybutylene terephthalate, polystyrene, and polyethylene).

As an example, the positive electrode active material layer includes a positive electrode active material. The positive electrode active material may include at least one of the following materials: a lithium-containing phosphate, a lithium transition metal oxide, and respective modified compounds thereof. However, the present application is not limited to these materials, and other conventional materials that may be used as positive electrode active materials for batteries can also be used. Only a single one of or a combination of two or more of these positive electrode active materials can be used. The example of the lithium-containing phosphate may include but is not limited to at least one of a group consisting of lithium iron phosphate (such as LiFePO₄ (LFP for short), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon. Examples of the lithium transition metal oxide may include, but are not limited to the group consisting of lithium cobalt oxides (e.g., LiCoO₂), lithium nickel oxides (e.g., LiNiO₂), lithium-manganese oxides (e.g., LiMnO₂, and LiMn₂O₄), lithium nickel cobalt oxides, lithium manganese cobalt oxides, lithium nickel manganese oxides (e.g., LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁), lithium nickel cobalt aluminum oxides (e.g., LiNi_{0.80}Co_{0.15}Al_{0.05}O₂) and modified compounds thereof.

In some embodiments, the positive electrode may adopt a foam carbon or a foam metal. The foam metal can be nickel foam, copper foam, aluminum foam, alloy foam, or the like. When the foam metal is used as the positive electrode, a surface of the foam metal may not be provided with a positive electrode active material, and of course, may also be provided with a positive electrode active material. As an example, a lithium source material, a potassium metal, or a sodium metal may also fill or/and be deposited in the foam metal, and the lithium source material is a lithium metal and/or a lithium-rich material.

In some embodiments, the negative electrode may be a negative electrode plate, and the negative electrode plate may include a negative electrode current collector and a negative electrode active material layer arranged on at least one surface of the negative electrode current collector.

As an example, the negative electrode current collector may be a metal foil, a foam metal, a foam carbon, or a composite current collector. For example, as the metal foil, stainless steel, copper, aluminum, nickel, silver-plated aluminum, silver-plated stainless steel, carbon electrode, carbon, nickel, or titanium may be adopted. The foam metal can be nickel foam, copper foam, aluminum foam, alloy foam, or the like. The composite current collector can include a polymer material substrate layer and a metal layer. The composite current collector can be formed by forming a metal material (copper, copper alloys, nickel, nickel alloys, titanium, titanium alloys, silver, silver alloys, and the like) on a polymer material substrate (such as polypropylene, polyethylene terephthalate, polybutylene terephthalate, polystyrene, and polyethylene).

As an example, the negative electrode active material may be a negative electrode active material commonly known in the art for use in battery cells. As an example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, tin-oxygen compound, and tin alloy. However, the present application is not limited to these materials, and other conventional materials useful as negative electrode active materials for batteries can also be used. Only a single one of or a combination of two or more of these negative electrode active materials can be used.

In some embodiments, the negative electrode may adopt a foam carbon or a foam metal. The foam metal can be nickel foam, copper foam, aluminum foam, alloy foam, or the like. When the foam metal is used as the negative electrode, a surface of the foam metal may not be provided with a negative electrode active material, and of course, may also be provided with a negative electrode active material.

As an example, a lithium source material, a potassium metal, or a sodium metal may also be filled or/and deposited in the negative electrode current collector, and the lithium source material is a lithium metal and/or a lithium-rich material.

In some embodiments, a material of the positive electrode current collector may be aluminum, and a material of the negative electrode current collector may be copper.

In some implementations, the electrode assembly further includes a spacer, and the spacer is provided between the positive electrode plate and the negative electrode plate.

In some embodiments, the spacer is a separator. A type of the separator is not particularly limited in the present application, and any well-known separator with a porous structure having good chemical stability and mechanical stability may be selected.

As an example, the main material of the separator can be selected from at least one of glass fibers, non-woven fabric, polyethylene, polypropylene, polyvinylidene fluoride, and ceramic. The separator can be either a single-layer thin film or a multi-layer composite thin film without special limitations. When the separator film is a multi-layer composite thin film, the materials of the layers can be the same or different, which is not particularly limited. The spacer may be a single component located between the positive and negative electrodes, or may also be attached to the surfaces of the positive and negative electrodes.

In some embodiments, the spacer is a solid electrolyte. The solid electrolyte is arranged between the positive electrode plate and the negative electrode plate and functions to both transmit ions between the positive electrode and the negative electrode and isolate the positive electrode from the negative electrode.

In some embodiments, the battery cell further includes an electrolyte, which functions to conduct ions between the positive and negative electrodes. The present application has no specific limitation on a type of the electrolyte, which can be selected according to requirements. The electrolyte can be liquid, gel, or solid.

In some embodiments, the liquid electrolyte further includes an electrolyte salt and a solvent.

In some embodiments, the electrolyte salt can be selected from at least one of lithium hexafluorophosphate, lithium tetrafluoroborate, lithium perchlorate, lithium hexafluoroarsenate, lithium bis(fluorosulfonyl)imide, lithium bis-trifluoromethanesulfonimide, lithium trifluoromethanesulfonate, lithium difluorophosphate, lithium difluorooxalatoborate, lithium bisoxalatoborate, lithium difluorobisoxalate phosphate, and lithium tetrafluoro oxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone. The solvent may also be an ether solvent. The ether solvent can include one or more of ethylene glycol dimethyl ether, ethylene glycol diethyl ether, diethylene glycol dimethyl ether, triethylene glycol dimethyl ether, 1,3-dioxolane, tetrahydrofuran, methyltetrahydrofuran, diphenylether, or a crowned ether.

The gel electrolyte includes a framework network with a polymer as an electrolyte, in combination with an ion liquid-lithium salt.

The solid electrolyte includes a polymer solid electrolyte, an inorganic solid electrolyte, and a composite solid electrolyte.

As an example, a polymer solid electrolyte may be polyether (polyoxyethylene), polysiloxane, polycarbonate, polyacrylonitrile, polyvinylidene fluoride, polymethyl methacrylate, a monoionic polymer, a polyionic liquid-lithium salt, cellulose, or the like.

As an example, the inorganic solid electrolyte may be one or more of an oxide solid electrolyte (crystalline perovskite, sodium superionic conductor, garnet, amorphous LiPON film), a sulfide solid electrolyte (a crystalline lithium superionic conductor (lithium germanium phosphorus sulfide and argyrodite), amorphous sulfide), a halide solid electrolyte, a nitride solid electrolyte, and a hydride solid electrolyte.

As an example, a composite solid electrolyte is formed by adding an inorganic solid electrolyte filler to a polymer solid electrolyte.

In some implementations, the electrode assembly is of a wound structure. The positive electrode plate and the negative electrode plate are wound into the wound structure.

In some implementations, the electrode assembly is of a laminated structure.

As an example, a plurality of positive electrode plates and a plurality of negative electrode plates may be provided, and the plurality of positive electrode plates and the plurality of negative electrode plates are alternately stacked.

As an example, a plurality of positive electrode plates may be provided, and the negative electrode plates are folded to form a plurality of stacked folded segments, with one positive electrode plate sandwiched between adjacent folded segments.

As an example, both the positive electrode plate and the negative electrode plate are folded to form a plurality of stacked folded segments.

As an example, a plurality of spacers may be provided and arranged between any adjacent positive electrode plates or negative electrode plates.

For example, the spacers can be continuously arranged between any adjacent positive electrode plates or negative electrode plates by folding or winding.

In some implementations, the electrode assembly may be cylindrical, flat, polyprismatic, or the like.

In some embodiments, the electrode assembly is provided with a tab, and the tab may lead current out of the electrode assembly. The tabs include a positive tab and a negative tab.

In some embodiments, the battery cell may include a shell. The shell is used to encapsulate components such as the electrode assembly and the electrolyte. The shell may be a steel shell, an aluminum shell, a plastic shell (such as polypropylene), a composite metal shell (such as a copper-aluminum composite shell), an aluminum-plastic film, or the like.

As an example, the battery cell may be a cylindrical battery cell, a prismatic battery cell, a pouch cell, or a battery cell in another shape. The prismatic battery cell includes a square-shell battery cell, a blade-shaped battery cell, and a multi-prism battery. For example, the multi-prism battery may be a hexagonal prism battery.

The battery mentioned in the embodiments of the present application refers to a single physical module including one or more battery cells to provide a higher voltage and capacity.

In some embodiments, the battery may be a battery module. When there are a plurality of battery cells, the plurality of battery cells are arranged and fixed to form a battery module.

In some examples, the battery may be a battery pack. The battery pack includes a box body and a battery cell. The battery cell or the battery module is accommodated in the box body.

In some embodiments, the box body may serve as a part of a chassis structure of the vehicle. For example, a part of the box body may become at least a part of a vehicle floor, or a part of the box body may become at least a part of a cross beam and a longitudinal beam of a vehicle.

In some embodiments, the battery may be an energy storage apparatus. The energy storage apparatus includes an energy storage container, an energy storage electric cabinet, or the like.

With the development of new energy technologies, batteries are increasingly more widely applied, for example, applied in mobile phones, laptops, electric bicycles, electric cars, electric airplanes, electric ships, electric toy cars, electric toy ships, electric toy airplanes, electric tools, and the like.

In a production process of battery cells, the external environment has a significant impact on the production quality of battery cells. Strict control of the external environment is usually required to reduce the risk of battery cell scrap. However, the strict control of the external environment will also increase the overall production cost of battery cells.

In some processes or stages of the battery cell production, it is necessary to communicate the internal space of the shell with the external space of the shell in order to complete relevant operations. For example, in a baking process of a battery cell, the internal space of the shell needs to be in communication with the external space of the shell so that water vapor in the internal space can be discharged to the external space. In a liquid injection process of a battery cell, the internal space of the shell needs to be in communication with the external space of the shell so that a liquid injection device located in the external space of the shell can inject an electrolyte solution into the external space of the shell. In a formation process of a battery cell, the internal space of the shell needs to be in communication with the external space of the shell so that gas generated in the formation process in the internal space can be discharged to the external space.

It is understandable that when the internal space of the shell is in communication with the external space of the shell, some factors in the external environment will affect the structure or components in the internal space of the shell. For example, if humidity is high in a battery cell manufacturing plant, when the internal space of the shell is in communication with the external space of the shell, moisture will enter the internal space of the shell, thereby affecting electrode plates, separator, electrolyte solution, or the like in the internal space of the shell.

If the internal space of the shell is always or for a long time in communication with the external space of the shell in the production process of the battery cell, in other words, if the internal space of the shell is still in communication with the external space of the shell when the battery cell is not being processed or when a processing step that does not require communicating the internal space of the shell with the external space of the shell to complete the relevant operations is being performed, it will increase the risk of damage to the internal structure or components of the battery cell by external environmental factors, and may easily lead to scrapping of the battery cell. Therefore, it is often necessary to strictly control the external environment, such as the humidity inside the production plant, in the production process of the battery cell, so as to reduce the risk of damage to the electrode plates, separator, electrolyte solution, or the like inside the battery cell. However, the cost of controlling the external environment is high, which will correspondingly increase the overall production cost of the battery cell and seriously affect economic benefits.

Based on the above consideration, a battery cell is designed in the present application. The battery cell includes a shell, a first valve, and a second valve. The shell is provided with a liquid injection hole and an exhaust vent. One of the first valve and the second valve is arranged at the liquid injection hole, and the other of the first valve and the second valve is arranged at the exhaust vent. Both the first valve and the second valve are configured to be capable of switching between connecting and disconnecting an internal space of the shell and an external space of the shell.

The first valve and/or the second valve is opened when the battery cell is undergoing a processing step that requires communication between the internal space of the shell and the external space of the shell to complete a relevant operation, so as to provide an operating condition for the processing step of the battery cell; and the first valve and/or the second valve is closed when the battery cell is not being processed or when the battery cell is undergoing a processing step that does not require communication between the internal space of the shell and the external space of the shell to complete a relevant operation, so as to isolate the interior of the battery cell from interaction with the external environment, reduce the impact of the external environment on an internal structure and component of the battery cell caused by the interaction between the external environment and the internal space of the shell through the liquid injection hole and the exhaust vent, thereby helping improve the production quality. At the same time, since the impact of the external environment on battery cells in the production process is reduced, control standards for the external environment can be lowered or the control of the external environment can be eliminated, which helps reduce the production costs.

Furthermore, structures of the first valve and the second valve can be designed differently according to different structures of the liquid injection hole and the exhaust vent, so as to better meet process requirements of liquid injection and venting, thereby being conducive to further improving the production quality.

The technical solution described in the embodiments of the present application is applicable to a battery and an electrical apparatus using the battery.

The electrical apparatus may be a vehicle, a mobile phone, a portable device, a laptop computer, a ship, a spacecraft, an electric toy, an electric tool, and the like. The vehicle may be a fuel vehicle, a gas vehicle, or a new energy vehicle. The new energy vehicle may be an all-electric vehicle, a hybrid electric vehicle, an extended-range electric vehicle, or the like. The spacecraft includes an airplane, a rocket, a space shuttle, a spaceship, and the like. The electric toy includes a fixed or mobile electric toy, such as a game console, an electric car toy, an electric ship toy, and an electric aircraft toy. The electric tool includes a metal cutting electric tool, a grinding electric tool, an assembly electric tool, and a railway electric tool, such as an electric drill, an electric grinder, an electric wrench, an electric a screwdriver, an electric hammer, an impact drill, a concrete vibrator, and an electric planer. These embodiments of the present application do not make special restrictions on the above electrical apparatuses.

It should be understood that the technical solutions described in the embodiments of the present application are not only applicable to the battery and electrical device described above, but also applicable to all batteries including battery box bodies and electrical devices using batteries. For the sake of brevity, the following embodiments are described by taking an electric vehicle as an example.

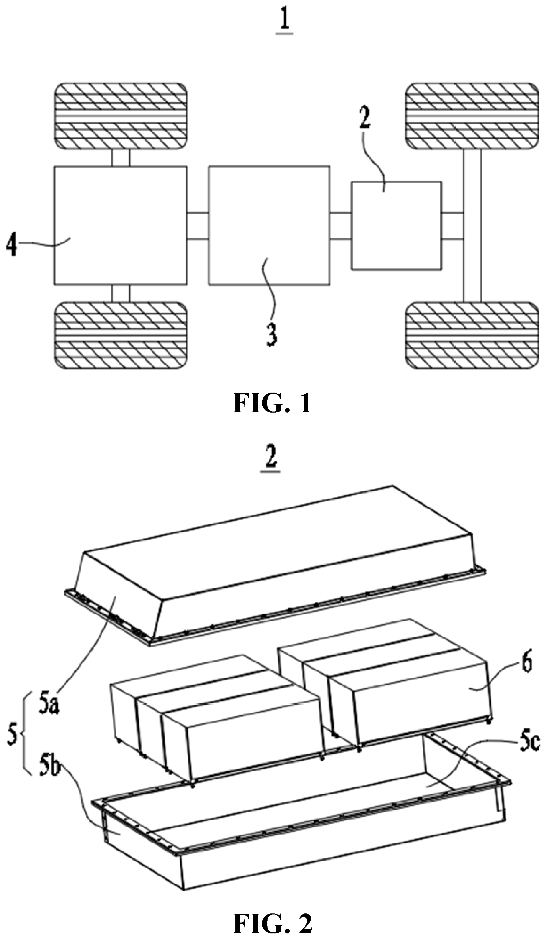

FIG. 1 is a schematic structural view of a vehicle according to some embodiments of the present application.

With continued reference to FIG. 1, a battery 2 is arranged in the vehicle 1. The battery 2 can be arranged at the bottom, or head, or tail of the vehicle 1. The battery 2 can be used as a power source for the vehicle 1, for example, the battery 2 can be used as an operating power source for the vehicle 1.

The vehicle 1 can further comprise a controller 3 and a motor 4. The controller 3 is used for controlling the battery 2 to supply power to the motor 4, for example, for the operating power demand when starting, navigating, and driving the vehicle 1.

In some embodiments of the present application, the battery 2 can be used not only as an operating power source for the vehicle 1, but also as a driving power source for the vehicle 1 to replace or partially replace fuel or natural gas to supply driving power to the vehicle 1.

FIG. 2 is an exploded schematic view of a battery provided by some embodiments of the present application.

With continued reference to FIG. 2, the battery 2 comprises a box body 5 and a battery cell. The battery cell is accommodated in the box body 5.

The box body 5 is used for accommodating the battery cell, and the box body 5 can have various structures. In some embodiments, the box body 5 may include a first box body part 5a and a second box body part 5b. The first box body part 5a and the second box body part 5b cover each other. The first box body part 5a and the second box body part 5b jointly define an accommodating space 5c used for accommodating the battery cell. The second box body part 5b can have a hollow structure with one end open. The first box body part 5a has a plate-like structure, and the first box body part 5a covers the open side of the second box body part 5b to form the box body 5 with the accommodating space 5c. Each of the first box body part 5a and the second box body part 5b can also have a hollow structure with one side open. The open side of the first box body part 5a covers the open side of the second box body part 5b to form the box body 5 with the accommodating space 5c. Of course, the first box body part 5a and the second box body part 5b can be in various shapes, such as cylinders and cuboids.

In order to improve the sealing performance after the first box body part 5a and the second box body part 5b are connected, a sealing member such as a sealant and a sealing ring may also be arranged between the first box body part 5a and the second box body part 5b.

It is assumed that the first box body part 5a covers the top of the second box body part 5b, the first box body part 5a can also be referred to as an upper box cover, and the second box body part 5b can also be referred to as a lower box body.

In the battery 2, there may be either one or a plurality of battery cells. If there are a plurality of battery cells, the plurality of battery cells can be connected in series, or in parallel, or in parallel-series connection. Parallel-series connection means that the plurality of battery cells are connected in both series and parallel. The plurality of battery cells can be directly connected together in series, or in parallel, or in series-parallel, and then, the entirety composed of the plurality of battery cells can be accommodated in the box body 5. Of course, the case may also be that a plurality of battery cells are connected in series, or in parallel, or in series-parallel in advance to form a battery module 6, and a plurality of battery modules 6 are then connected in series, or in parallel, or in series-parallel to form an entirety and accommodated in the box body 5.

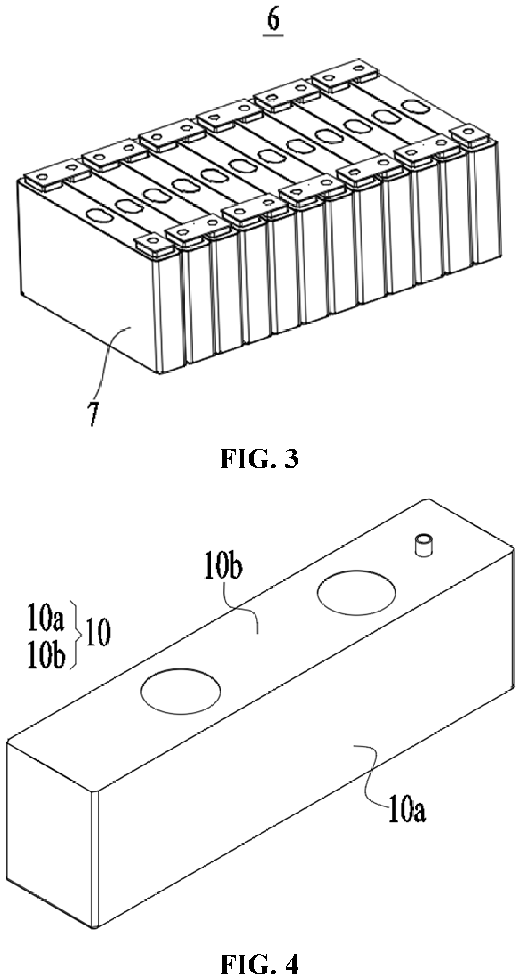

FIG. 3 is a schematic structural view of a battery module shown in FIG. 2.

In some embodiments, with continued reference to this figure, there are a plurality of battery cells 7, and the plurality of battery cells 7 are connected in series, or in parallel, or in series-parallel in advance to form a battery module 6. A plurality of battery modules 6 are then connected in series, or in parallel, or in series-parallel to form an entirety and accommodated in the box body.

The plurality of battery cells 7 in the battery module 6 can be electrically connected to each other via a busbar component to realize the connection of the plurality of battery cells 7 in the battery module 6 in series, or in parallel, or in series-parallel.

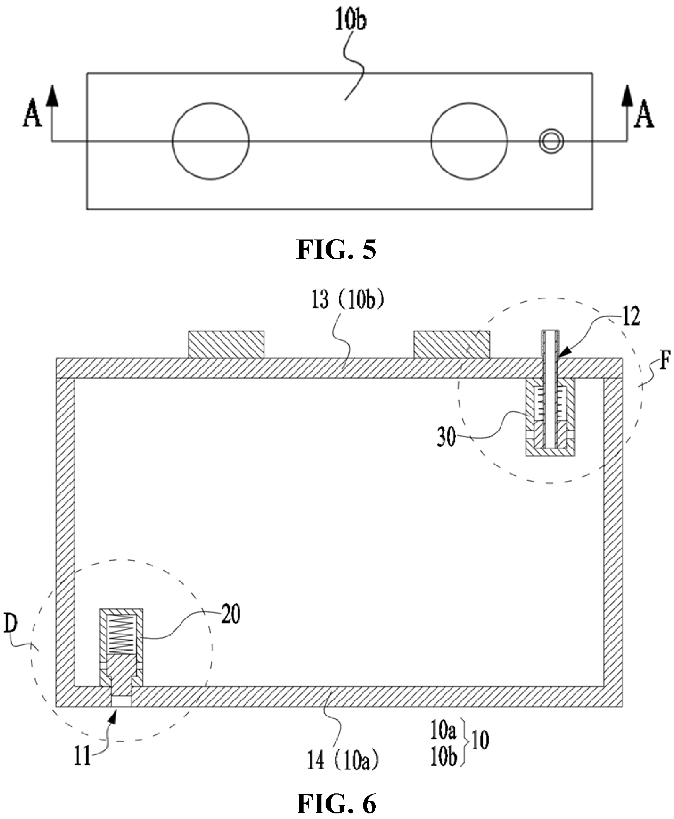

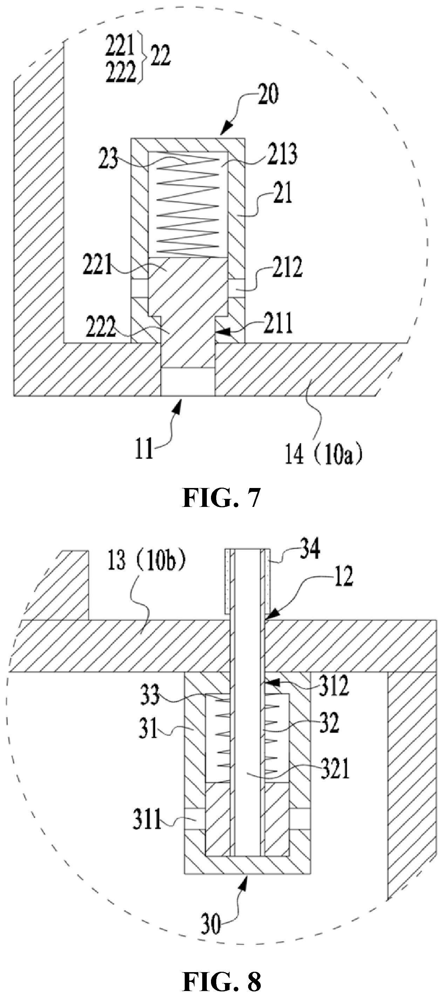

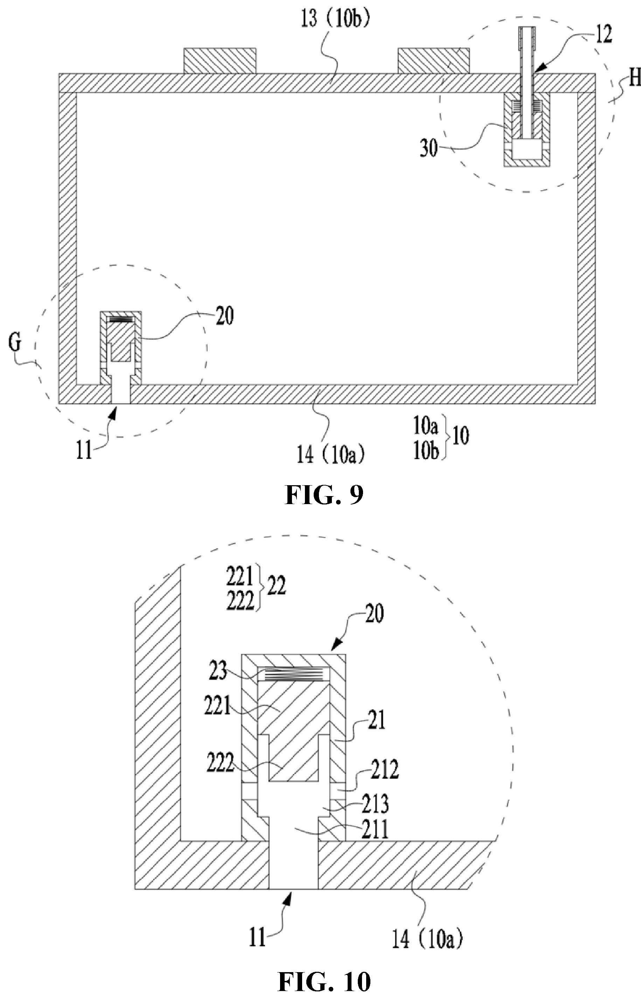

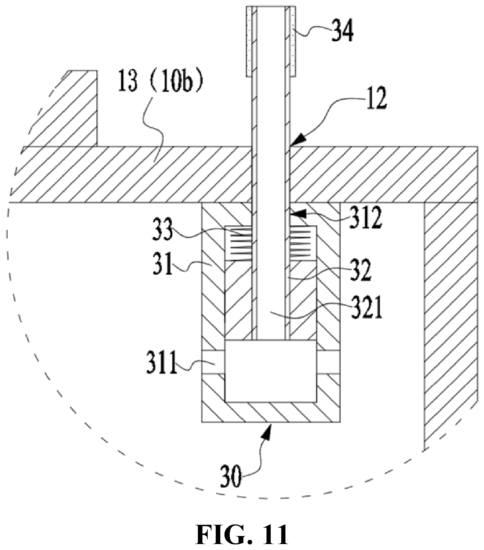

FIG. 4 is a schematic structural view of a battery cell according to some embodiments of the present application, FIG. 5 is a schematic structural top view of the battery cell shown in FIG. 4, FIG. 6 is a schematic sectional structural view of the battery cell shown in FIG. 5 along A-A when both a first valve and a second valve are in a closed state, FIG. 7 is a schematic partial enlarged structural view of a place D in FIG. 6, FIG. 8 is a schematic partial enlarged structural view of a place F in FIG. 6, FIG. 9 is a schematic sectional structural view of the battery cell shown in FIG. 5 along A-A when both a first valve and a second valve are in an opening state, FIG. 10 is a schematic partial enlarged structural view of a place G in FIG. 9, and FIG. 11 is a schematic partial enlarged structural view of a place H in FIG. 9.

As shown in FIG. 4 to FIG. 11, the embodiments of the present application provide a battery cell 7, and the battery cell 7 includes a shell 10, a first valve 20, and a second valve 30. The shell 10 is provided with a liquid injection hole 11 and an exhaust vent 12. One of the first valve 20 and the second valve 30 is disposed in the liquid injection hole 11, and the other of the first valve 20 and the second valve 30 is disposed in the exhaust vent 12. Both the first valve 20 and the second valve 30 are configured to be capable of switching between connecting and disconnecting an internal space of the shell 10 and an external space of the shell 10.

For example, the shell 10 is a component configured to form the internal environment of the battery cell 7. The formed internal environment can be used for accommodating the electrode assembly, an electrolyte solution, and other components. Optionally, the shell 10 may be, but not limited to, made of a metallic or non-metallic material. For example, the metallic material may be copper, aluminum, stainless steel, or the like; and the non-metallic material may be polyethylene, polypropylene, polyvinyl chloride, or the like.

The electrode assembly is a component of the battery cell 7 where an electrochemical reaction occurs. The electrode assembly is mainly formed by winding or stacking a positive electrode plate and a negative electrode plate, and a separator is generally arranged between the positive electrode plate and the negative electrode plate. The portions of the positive electrode plate and the negative electrode plate that contain active materials constitute a main body portion of the electrode assembly, and the portions of the positive electrode plate and the negative electrode plate that do not contain active materials each constitute a tab. The positive tab and the negative tab may be located at one end of the main body portion together or located at two ends of the main body portion respectively. In a charging or discharging process of the battery, the positive active material and the negative active material react with the electrolytic solution, and the tabs are connected to a terminal assembly to form a current loop.

A liquid injection hole 11 is provided on the shell 10. The liquid injection hole 11 communicates the internal space of the shell 10 with the external space, to facilitate a liquid injection device to inject the electrolyte solution into the battery cell 7 in the liquid injection process of the battery cell 7. An exhaust vent 12 is provided on the shell 10. The exhaust vent 12 communicates the internal space of the shell 10 with the external space, so as to discharge water vapor in the baking process of the battery cell 7 and to discharge gas in the formation process of the battery cell 7.

The first valve 20 and the second valve 30 are respectively located at the liquid injection hole 11 and the exhaust vent 12. Alternatively, the first valve 20 may be located at the liquid injection hole 11, and the second valve 30 may be located at the exhaust vent 12; or the first valve 20 may be located at the exhaust vent 12, and the second valve 30 may be located at the liquid injection hole 11.

The first valve 20 is configured to be capable of switching between connecting and disconnecting the internal space of the shell 10 and the external space of the shell 10. In other words, the first valve 20 includes an open state and a closed state, and the first valve 20 is switchable between an open state and a closed state. Specifically, when the first valve 20 is in the open state, the internal space of the shell 10 is in communication with the external space of the shell 10. When the first valve 20 is in the closed state, the internal space of the shell 10 is in isolation from the external space of the shell 10.

Optionally, but not limited to, the first valve 20 may be opened or closed by manual operation, mechanical operation, electrical signals, or instructions from an automated control system.

The second valve 30 is configured to be capable of switching between connecting and disconnecting the internal space of the shell 10 and the external space of the shell 10. In other words, the second valve 30 includes an open state and a closed state, and the second valve 30 is switchable between an open state and a closed state. Specifically, when the second valve 30 is in the open state, the internal space of the shell 10 is in communication with the external space of the shell 10. When the second valve 30 is in the closed state, the internal space of the shell 10 is in isolation from the external space of the shell 10.

Optionally, but not limited to, the second valve 30 may be opened or closed by manual operation, mechanical operation, electrical signals, or instructions from an automated control system.

The first valve 20 and the second valve 30 may have the same physical structure or different physical structures. As an example, the first valve 20 may be an electrically controlled valve and the second valve 30 may be a mechanical valve; or both the first valve 20 and the second valve 30 may be electrically controlled valves; or both the first valve 20 and the second valve 30 may be mechanical valves. It should be noted that an electrically controlled valve refers to a valve that is opened or closed by an electrical signal, while a mechanical valve refers to a valve that is opened or closed by applying an external force.

The first valve 20 may be detachably connected to the shell 10, or it may be integrally arranged on the shell 10. The first valve 20 may be directly connected to the shell 10, or it may be restricted to the shell 10 by other components. As an example, the connection between the first valve 20 and the shell 10 may be, but is not limited to, bolt connection, welding, riveting, snap-fit, or the like.

The second valve 30 may be detachably connected to the shell 10, or it may be integrally arranged on the shell 10. The second valve 30 may be directly connected to the shell 10, or it may be restricted to the shell 10 by other components. As an example, the connection between the second valve 30 and the shell 10 may be, but is not limited to, bolt connection, welding, riveting, snap-fit, or the like.

Optionally, the first valve 20 and the second valve 30 may both be, but not limited to, made of a metallic or non-metallic material. For example, the metallic material may be steel, iron, copper, copper alloy, aluminum, aluminum alloy, or the like; and the non-metallic material may be polyethylene, polypropylene, polyvinyl chloride, rubber, or the like. As an example, the first valve 20 and the second valve 30 may be made of the same material to simplify the manufacturing process and reduce costs.

In some processes or stages of the production of the battery cell 7, it is necessary to communicate the internal space of the shell 10 with the external space of the shell 10 in order to complete relevant operations. For example, in the baking process of the battery cell 7, the internal space of the shell 10 needs to be in communication with the external space of the shell 10 so that water vapor in the internal space can be discharged to the external space. In the liquid injection process of the battery cell 7, the internal space of the shell 10 needs to be in communication with the external space of the shell 10 so that the liquid injection device located in the external space of the shell 10 can inject the electrolyte solution into the external space of the shell 10. In the formation process of the battery cell 7, the internal space of the shell 10 needs to be in communication with the external space of the shell 10 so that gas generated in the formation process in the internal space can be discharged to the external space.

As an example, the first valve 20 is arranged at the liquid injection hole 11. When the battery cell 7 is in the liquid injection process, the first valve 20 is opened so that the internal space of the shell 10 is in communication with the external space of the shell 10, so that the liquid injection device can inject the electrolyte solution into the battery cell 7. After the battery cell 7 completes the liquid injection process, the first valve 20 is closed so that the internal space of the shell 10 is isolated from the external space of the shell 10, so as to isolate the interaction between the external environment and the interior of the battery cell 7, thereby reducing the impact of the external environmental factors on the internal structure and components of the battery cell 7. The second valve 30 is arranged at the exhaust vent 12. When the battery cell 7 is undergoing the baking or formation process, the second valve 30 is opened so that the internal space of the shell 10 is in communication with the external space of the shell 10, so as to discharge water vapor or gas. After the battery cell 7 has completed the baking or formation process, the second valve 30 is closed so that the internal space of the shell 10 is isolated from the external space of the shell 10, so as to isolate the interaction between the external environment and the interior of the battery cell 7, thereby reducing the impact of external environmental factors on the internal structure and components of the battery cell 7.

It should be understood that the technical solutions described in the embodiments of the present application are not limited to the baking process, liquid injection process, and formation process described above, but may also be applied to all processing processes that require communication between the internal space of the shell 10 and the external space of the shell 10 in order to complete the relevant operations. However, for the sake of brevity, the following embodiments are all illustrated using the baking process, liquid injection process, or formation process as examples.

It is understandable that when the internal space of the shell 10 is in communication with the external space of the shell 10, some factors in the external environment will affect the structure or components in the internal space of the shell 10. For example, if humidity is high in a manufacturing plant of the battery cell 7, when the internal space of the shell 10 is in communication with the external space of the shell 10, moisture will enter the internal space of the shell 10, thereby affecting electrode plates, separator, electrolyte solution, or the like in the internal space of the shell 10.

If the internal space of the shell 10 is always or for a long time in communication with the external space of the shell 10 in the production process of the battery cell 7, in other words, if the internal space of the shell 10 is still in communication with the external space of the shell 10 when the battery cell 7 is not being processed or when the processing step that does not require communicating the internal space of the shell 10 with the external space of the shell 10 to complete the relevant operations is being performed, it will increase the risk of damage to the internal structure or components of the battery cell 7 by external environmental factors, and may easily lead to scrapping of the battery cell 7. Therefore, it is often necessary to strictly control the external environment, such as the humidity inside the production plant, in the production process of the battery cell 7, so as to reduce the risk of damage to the electrode plates, separator, electrolyte solution, or the like inside the battery cell 7. However, the cost of controlling the external environment is high, which will correspondingly increase the overall production cost of the battery cell 7 and seriously affect economic benefits.

Therefore, the above technical solution of the present application is capable of opening the first valve 20 and/or the second valve 30 when the battery cell 7 is undergoing a processing step that requires communication between the internal space of the shell 10 and the external space of the shell 10 to complete a relevant operation, so as to provide an operating condition for the processing step of the battery cell 7; and closing the first valve 20 and/or the second valve 30 when the battery cell 7 is not being processed or when the battery cell is undergoing a processing step that does not require communication between the internal space of the shell 10 and the external space of the shell 10 to complete a relevant operation, so as to isolate the internal space of the battery cell 7 from interaction with the external environment, effectively reduce the impact of the external environment on an internal structure and component of the battery cell 7 caused by the interaction between the external environment and the internal space of the shell 10 through the liquid injection hole 11 and the exhaust vent 12, thereby helping improve the production quality. At the same time, since the impact of the external environment on the battery cell 7 in the production process is reduced, control standards for the external environment can be lowered or the control of the external environment can be eliminated, which helps reduce the production costs.

Furthermore, structures of the first valve 20 and the second valve 30 can be designed differently according to different structures of the liquid injection hole 11 and the exhaust vent 12, so as to better meet process requirements of liquid injection and venting, thereby being conducive to further improving the production quality.

In some embodiments, the shell 10 includes a first wall 13 and a second wall 14, where the exhaust vent 12 is provided on the first wall 13 and the liquid injection hole 11 is provided on the second wall 14.

For example, the first wall 13 and the second wall 14 are different walls on the shell 10. The first wall 13 and the second wall 14 may be arranged adjacent to each other, or the first wall 13 and the second wall 14 may be arranged opposite to each other.

By providing the exhaust vent 12 and the liquid injection hole 11 on the first wall 13 and the second wall 14 respectively, on the one hand, a space for arranging the first valve 20 and the second valve 30 can be increased, which is conducive to reducing the difficulty of arranging the first valve 20 and the second valve 30; on the other hand, it is further conducive to maintaining structural stability and balance of the shell 10, thereby improving overall reliability of the battery cell 7.

In some embodiments, the first wall 13 and the second wall 14 are arranged opposite to each other, which can further improve the overall structural balance of the shell 10.

For example, the first wall 13 and the second wall 14 may be arranged opposite each other in a height direction of the battery cell 7, the first wall 13 and the second wall 14 may be arranged opposite each other in a width direction of the battery cell 7, or the first wall 13 and the second wall 14 may be arranged opposite each other in a length direction of the battery cell 7.

In some embodiments, the shell 10 includes an end cover 10b and a case 10a. The case 10a is provided with an opening. The end cover 10b covers the opening, and the end cover 10b serves as a first wall 13. The case 10a includes a second wall 14, and the second wall 14 is arranged opposite to the end cover 10b.

For example, the end cover 10b refers to a component that covers the opening of the case 10a to isolate the internal environment of the battery cell 7 from the external environment. Optionally, the shape of the end cover 10b may be adapted to the shape of the case 10a to fit the case 10a. Optionally, the end cover 10b may be made of a material (such as aluminum alloy) with a certain hardness and strength, and in this way, the end cover 10b is not easily deformed when being subjected to extrusion and collisions, such that the battery cell 7 is capable of having a higher structural strength, and the reliability can also be improved. A functional component such as the terminal assembly may be arranged on the end cover 10b. In some embodiments, the end cover 10b may be further provided with a pressure relief mechanism configured to relief an internal pressure when the internal pressure or temperature of the battery cell 77 reaches a threshold. The end cover 10b may also be made of various materials. For example, the end cover 10b may be, but not limited to, made of a metallic or non-metallic material. For example, the metallic material may be copper, aluminum, stainless steel, or the like; and the non-metallic material may be polyethylene, polypropylene, polyvinyl chloride, or the like.

The case 10a is an assembly configured to fit the end cover 10b to form the internal environment of the battery cell 7. The formed internal environment can be used for accommodating the electrode assembly, an electrolyte solution, and other components. The case 10a and the end cover 10b may be separate components, the case 10a may be provided with an opening, and the internal environment of the battery cell 7 is formed by making the end cover 10b cover the opening at the opening. Optionally, the end cover 10b and the case 10a may also be integrated. Specifically, the end cover 10b and the case 10a may form a common connecting surface before other components enter the case. When the interior of the case 10a is required to be encapsulated, the case 10a is covered by the end cover 10b. The case 10a may be of various shapes and dimensions, such as a cuboid, a cylinder, and a hexagonal prism. Specifically, the shape of the case 10a may be determined according to the specific shape and dimension of the electrode assembly. The case 10a may also be made of various materials. For example, the case 10a may be, but not limited to, made of a metallic or non-metallic material. For example, the metallic material may be copper, aluminum, stainless steel, or the like; and the non-metallic material may be polyethylene, polypropylene, polyvinyl chloride, or the like.

Optionally, the end cover 10b may be detachably connected to the case 10a, or it may be integrally arranged on the case 10a. The end cover 10b may be directly connected to the case 10a, or it may be restricted to the case 10a by other components. As an example, the connection between the end cover 10b and the case 10a may be, but is not limited to, welding, riveting, or bonding.

The second wall 14 is arranged opposite to the end cover 10b. In other words, the second wall 14 may be understood as a bottom wall of the case 10a. The end cover 10b is located on top of the battery cell 7. Since the gas itself will gather towards the top of the battery cell 7, the exhaust vent 12 is provided on the end cover 10b, which helps improve the gas discharge efficiency. The second wall 14 is located at the bottom of the battery cell 7, and the liquid injection hole 11 is located on the second wall 14. In the liquid injection process of the battery cell 7, the liquid injection device injects the electrolyte solution from the bottom of the battery cell 7. Due to the effect of gravity, even if the electrolyte solution leaks, the electrolyte solution will drip directly towards the ground and will not adhere to the battery cell 7, thereby effectively reducing the risk of electrolyte solution contamination of the battery cell 7.

As such, the above technical solution can not only improve a gas discharge efficiency in the processing steps of the battery cell 7 that require venting, but also effectively reduce the risk of electrolyte solution contamination of the battery cell 7 in the liquid injection process of the battery cell 7.

In some embodiments, the first valve 20 includes a first main body portion 21 and a first core portion 22, the first main body portion 21 including a first port 211 and a second port 212 that are in communication with each other, the first port 211 being in communication with the external space, and the second port 212 being in communication with the internal space. The first core portion 22 is arranged in the first main body portion 21. The first core portion 22 is configured to be capable of opening when subjected to a pressure, so that the first port 211 and the second port 212 are in communication with each other, and be capable of isolating the first port 211 from the second port 212 when not subjected to any pressure.

For example, in the liquid injection process of the battery cell 7, the first port 211 mainly serves as an inlet path for the electrolyte solution to be transported from the external space of the shell 10 to the internal space of the shell 10, while the second port 212 is used to guide the electrolyte solution into the internal space of the shell 10. In the baking process of the battery cell 7, the second port 212 mainly serves as an inlet path for water vapor to enter the first valve 20 from the internal space of the shell 10, while the first port 211 is used to guide the water vapor to be discharged to the external space of the shell 10. In the formation process of the battery cell 7, the second port 212 mainly serves as an inlet path for gas to enter the internal space of the shell 10 into the first valve 20, while the first port 211 is used to guide gas to discharge to the outer space of the shell 10.

Optionally, the first core portion 22 may be detachably connected to the first main body portion 21, or it may be integrally arranged on the first main body portion 21. The first core portion 22 may be directly connected to the first main body portion 21, or it may be restricted to the first main body portion 21 by another component. The first core portion 22 and the first main body portion 21 may both be, but not limited to, made of a metallic or non-metallic material. For example, the metallic material may be steel, iron, copper, copper alloy, aluminum, aluminum alloy, or the like; and the non-metallic material may be polyethylene, polypropylene, polyvinyl chloride, or the like.

As an example, the liquid injection process of the battery cell 7 may be used for illustration. The first core portion 22 is designed to be capable of dynamically responding to the external pressure, so as to achieve a push-to-open valve function. In a normal state, the first core portion 22 is not subjected to any external force and the first core portion 22 remains in the closed state, so that the first port 211 and the second port 212 are isolated, thereby cutting off the interaction between the external environment and the interior of the battery cell 7. When the battery cell 7 needs to be injected with the electrolyte solution, a pressure is applied to the first core portion 22 to open the first core portion 22, so that the first port 211 and the second port 212 are in communication, thereby enabling the liquid injection device to inject the electrolyte solution into the battery cell 7 through the first valve 20. After the liquid injection of the battery cell 7 is completed, the external pressure acting on the first core portion 22 is removed. The first core portion 22 automatically returns to its closed state by relying on a preset recovery mechanism, and the first port 211 and the second port 212 are isolated again, thereby cutting off the interaction between the external environment and the interior of the battery cell 7 again.

For example, but not limited to, the pressure may be applied to the first core portion 22 by manual operation, mechanical operation, electrical signals, or instructions from an automated control system.

Optionally, the first core portion 22 may be, but is not limited to, a plate-shaped structure, a block-shaped structure, or a spherical structure, and the specific shape and size of the first core portion 22 may be set according to the specific structure inside the first main body portion 21.

Optionally, the first core portion 22 and the first main body portion 21 may be, but not limited to, made of a metallic or non-metallic material. For example, the metallic material may be steel, iron, copper, copper alloy, aluminum, aluminum alloy, or the like; and the non-metallic material may be polyethylene, polypropylene, polyvinyl chloride, or the like. Further, the first core portion 22 and the first main body portion 21 may be made of the same material to simplify the manufacturing process and reduce costs.

As an example, the first core portion 22 is movably configured relative to the first main body portion 21 so that the first core portion 22 has an initial position and a valve open position. When the first core portion 22 is not subjected to any pressure, the first core portion 22 is in the initial position and is capable of isolating the first port 211 and the second port 212 so that the first port 211 and the second port 212 are not in communication. When a pressure is applied to the first core portion 22, the first core portion 22 is in the valve open position and the isolation of the first port 211 and the second port 212 is removed so that the first port 211 and the second port 212 are in communication.

As another example, the first core portion 22 includes a first valve 20 port and a first sealing member, the first port 211 and the second port 212 are capable of being in communication through the first valve 20 port, and the first sealing member is movably arranged to open or close the first valve 20 port. When the first core portion 22 is not subjected to any pressure, the first valve 20 port is closed, which is capable of cutting off the passage between the first port 211 and the second port 212. When a pressure is applied to the first core portion 22, the first valve 20 port is opened, so that the first port 211 and the second port 212 are in communication with each other through the first valve 20 port.

The above technical solution sets the first valve 20 as a press-type valve. During opening and closing of the first valve 20, the first core portion 22 moves in a direction close to an internal space of the shell 10, which can significantly reduce requirements for the external operating space of the battery cell 7 and help adapt to more processing steps of the battery cell 7. In addition, the first valve 20 is opened by pressing, so that the operation is more convenient and the production efficiency of the battery cell 7 can be effectively improved.

In some alternative embodiments, the second valve 30 may be configured as a press-type valve having the same or similar structure as the first valve 20.

In some embodiments of the first aspect, the first valve 20 further includes a first elastic body 23, where the first elastic body 23 connects the first main body portion 21 and the first core portion 22, and the first elastic body 23 applies a force to the first core portion 22 in a direction close to the first port 211.

For example, the first elastic body 23 is configured to provide a preset force to the first core portion 22. The first elastic body 23 applies a force to the first core portion 22 in the direction close to the first port 211 through its inherent elasticity, so that the first core portion 22 can abut against a junction of the first port 211 and the second port 212 when the first core portion 22 is not subjected to any external pressure, so as to isolate the first port 211 from the second port 212. When the external pressure applied to the first core portion 22 exceeds the elastic force applied to the first core portion 22 by the first elastic body 23, the first core portion 22 moves in a direction away from the first port 211, so that the first port 211 and the second port 212 are in communication with each other.

The first elastic body 23 may be detachably connected to the first main body portion 21 and the first core portion 22, or it may be integrally arranged on the first main body portion 21 and the first core portion 22. The first elastic body 23 may be directly connected to the first main body portion 21 and the first core portion 22, or it may be restricted to the first main body portion 21 and the first core portion 22 by other components. As an example, the connection between the first elastic body 23 and the first main body portion 21 and the connection between the first elastic body 23 and the first core portion 22 may be, but are not limited to, bolt connection, welding, riveting, snap-fit, or the like.

Optionally, the first elastic body 23 may be, but is not limited to, a spring, a rubber strip, a shape memory alloy component, or the like. Furthermore, by selecting first elastic bodies 23 with different elastic coefficients or adjusting a preload of the first elastic body 23, different switching sensitivities of the first valve 20 may be set, thus improving the applicability.

The above technical solution provides a preset force to the first core portion 22 by arranging the first elastic body 23. This not only simplifies the structure and helps reduce the manufacturing cost of the first valve 20, but also allows for flexible adjustment of the shape, size, and material of the first elastic body 23 according to different application environments and requirements, thereby being conducive to improving the design flexibility and applicability of the first valve 20.

In some embodiments, the first elastic body 23 is arranged on a side of the first core portion 22 facing away from the first port 211.

For example, the first elastic body 23 applies a force to the first core portion 22 in the direction close to the first port 211 through its own elastic deformation. When the first elastic body 23 is arranged on the side of the first core portion 22 facing away from the first port 211, the first elastic body 23 will always be in a compressed state to provide a thrust to the first core portion 22.

As such, compression of the first elastic body 23 makes a volume of the first elastic body 23 relatively small, thus being capable of reducing an occupancy rate of the first elastic body 23 for an internal space in the first valve 20. Therefore, it is capable of freeing up more space within the first valve 20 for functions such as conveying an electrolyte solution or gas during the processing of battery cell 7, thereby improving the production efficiency of the battery cell 7.

In some embodiments, the first main body portion 21 further includes a cavity 213, and the cavity 213 is in communication with the first port 211 and the second port 212. The first core portion 22 includes a body 221 and a protruding portion 222 connected to each other. The protruding portion 222 protrudes from a surface of a side of the body 221 near the first port 211. The body 221 is arranged in the cavity 213, and the surface of the side of the body 221 near the first port 211 abuts against the first main body portion 21. At least a portion of the protruding portion 222 is accommodated in the first port 211.

For example, the protruding portion 222 mainly functions to block the first port 211. A first step structure formed between the protruding portion 222 and the body 221 and a second step structure formed between the first port 211 and the cavity 213 abut against each other to form an effective sealing path, thereby being capable of further improving the sealing performance of the first valve 20 in the closed state. In this case, a portion of the protruding portion 222 may be accommodated in the first port 211, or all of the protruding portion 222 may be accommodated in the first port 211.

The protruding portion 222 may be detachably connected to the body 221, or it may be integrally arranged on the body 221. The first elastic body 23 may be directly connected to the body 221, or it may be restricted to the body 221 by another component. As an example, the connection between the first elastic body 23 and the body 221 may be, but is not limited to, bolt connection, welding, riveting, snap-fit, or the like.

Optionally, the body 221 and the protruding portion 222 are integrally formed. On the one hand, there is no need to connect the body 221 and the protruding portion 222 by an additional connection process, which simplifies the manufacturing process. On the other hand, compared to connecting the body 221 and the protruding portion 222 through an additional connection process, the body 221 and the protruding portion 222, which are of an integral structure, have a higher connection strength.

The above technical solution is capable of improving the sealing performance when the first valve 20 is in the closed state, thereby reducing impact of external environmental factors on the battery cell 7 in the production process, and further improving the production quality.

In some embodiments, the second valve 30 includes a second main body portion 31 and a second core portion 32, the second main body portion 31 including a third port 311 and a fourth port 312 that are in communication with each other, the third port 311 being in communication with the internal space. The second core portion 32 is arranged in the second main body portion 31. A portion of the second core portion 32 passes through the fourth port 312 and extends out of the shell 10. The second core portion 32 is provided with a channel 321, and the channel 321 is in communication with the external space. The second core portion 32 is configured to be capable of opening when subjected to a tensile force so that the third port 311 and the channel 321 are in communication with each other, and be capable of isolating the third port 311 from the channel 321 when not subjected to any tensile force.

For example, the fourth port 312 is used to avoid the second core portion 32 so that a portion of the second core portion 32 can pass through the fourth port 312 and extend out of the shell 10. The function of the second core portion 32 located in the external space of the shell 10 is to facilitate the operator or device to grasp the second core portion 32 to apply a tensile force to it. In the liquid injection process of the battery cell 7, the channel 321 mainly serves as an inlet path for the electrolyte solution to be transported from the external space of the shell 10 to the internal space of the shell 10, while the third port 311 is used to guide the electrolyte solution into the internal space of the shell 10. In the baking process of the battery cell 7, the third port 311 mainly serves as an inlet path for water vapor to enter the first valve 20 from the internal space of the shell 10, while the channel 321 is used to guide the water vapor to be discharged to the external space of the shell 10. In the formation process of the battery cell 7, the third port 311 mainly serves as an inlet path for gas to enter the internal space of the shell 10 into the first valve 20, while the channel 321 is used to guide gas to discharge to the outer space of the shell 10.

Optionally, the second core portion 32 may be detachably connected to the second main body portion 31, or it may be integrally arranged on the second main body portion 31. The second core portion 32 may be directly connected to the second main body portion 31, or it may be restricted to the second main body portion 31 by another component. The second core portion 32 and the second main body portion 31 may both be, but not limited to, made of a metallic or non-metallic material. For example, the metallic material may be steel, iron, copper, copper alloy, aluminum, aluminum alloy, or the like; and the non-metallic material may be polyethylene, polypropylene, polyvinyl chloride, or the like.

As an example, the formation process of the battery cell 7 may be used for illustration. The second core portion 32 is designed to be capable of dynamically responding to the external tensile force, so as to realize a pull-type valve opening function. In a normal state, the second core portion 32 is not subjected to any external force and the second core portion 32 remains in the closed state, so that the third port 311 and the channel 321 are isolated, thereby cutting off the interaction between the external environment and the interior of the battery cell 7. When the battery cell 7 needs to be formed, a tensile force is applied to the second core portion 32 to open the second core portion 32, so that the third port 311 and the channel 321 are in communication, thereby enabling gas generated by the formation in the internal space of the shell 10 to be discharged to the external space of the shell 10 through the second valve 30. After the formation of the battery cell 7 is completed, the external tensile force acting on the second core portion 32 is removed. The second core portion 32 automatically returns to its closed state by relying on a preset recovery mechanism, and the third port 311 and the channel 321 are isolated again, thereby cutting off the interaction between the external environment and the interior of the battery cell 7 again.

For example, but not limited to, the pressure may be applied to the second core portion 32 by manual operation, mechanical operation, electrical signals, or instructions from an automated control system.

Optionally, the second core portion 32 may be, but is not limited to, a plate-shaped structure, a block-shaped structure, or a spherical structure, and the specific shape and size of the second core portion 32 may be set according to the specific structure inside the second main body portion 31.

Optionally, the second core portion 32 and the second main body portion 31 may be, but not limited to, made of a metallic or non-metallic material. For example, the metallic material may be steel, iron, copper, copper alloy, aluminum, aluminum alloy, or the like; and the non-metallic material may be polyethylene, polypropylene, polyvinyl chloride, or the like. Further, the second core portion 32 and the second main body portion 31 may be made of the same material to simplify the manufacturing process and reduce costs.

As an example, the second core portion 32 is movably configured relative to the second main body portion 31 so that the second core portion 32 has an initial position and a valve open position. When the second core portion 32 is not subjected to any tensile force, the second core portion 32 is in the initial position and is capable of isolating the third port 311 and the channel 321 so that the third port 311 and the channel 321 are not in communication. When a tensile force is applied to the second core portion 32, the second core portion 32 is in the valve open position and the isolation of the third port 311 and the channel 321 is removed so that the third port 311 and the channel 321 are in communication.

As another example, the second core portion 32 includes a second valve 30 port and a second sealing member, the third port 311 and the channel 321 are capable of being in communication through the second valve 30 port, and the second sealing member is movably arranged to open or close the second valve 30 port. When the second core portion 32 is not subjected to any tensile force, the second valve 30 port is closed, which is capable of cutting off the passage between the third port 311 and the channel 321. When a tensile force is applied to the second core portion 32, the second valve 30 port is opened, so that the third port 311 and the channel 321 are in communication with each other through the second valve 30 port.

The above technical solution sets the second valve 30 as a pull-type valve. During opening and closing of the second valve 30, the second core portion 32 moves in a direction away from the internal space of the shell 10. It is capable of reducing the risk of the second core portion 32 falling out into the internal space of the shell 10 during the movement, thereby being conducive to improving the reliability of the battery cell 7.

In some alternative embodiments, the first valve 20 may be configured as a pull-type valve having the same or similar structure as the second valve 30.

In some alternative embodiments, the first valve 20 is arranged at the liquid injection hole 11 and configured as a press-type valve to facilitate the liquid injection operation of the liquid injection device, and the second valve 30 is arranged at the exhaust vent 12 and configured as a pull-type valve to facilitate the venting operation.

In some embodiments of the first aspect, the second valve 30 further includes a second elastic body 33, where the second elastic body 33 connects the second main body portion 31 and the second core portion 32, and the second elastic body 33 applies a force to the second core portion 32 in a direction away from the fourth port 312.

For example, the second elastic body 33 is configured to provide a preset force to the second core portion 32. The second elastic body 33 applies a force to the second core portion 32 in the direction away from the fourth port 312 through its inherent elasticity, so that the second core portion 32 can block the third port 311 when the second core portion 32 is not subjected to any external tensile force, so as to isolate the third port 311 from the channel 321. When the external tensile force applied to the second core portion 32 exceeds the elastic force applied to the second core portion 32 by the second elastic body 33, the second core portion 32 moves in a direction close to the fourth port 312 to remove the block for the third port 311, so that the third port 311 and the channel 321 are in communication with each other.

The second elastic body 33 may be detachably connected to the second main body portion 31 and the second core portion 32, or it may be integrally arranged on the second main body portion 31 and the second core portion 32. The second elastic body 33 may be directly connected to the second main body portion 31 and the second core portion 32, or it may be restricted to the second main body portion 31 and the second core portion 32 by other components. As an example, the connection between the second elastic body 33 and the second main body portion 31 and the connection between the second elastic body 33 and the second core portion 32 may be, but are not limited to, bolt connection, welding, riveting, snap-fit, or the like.

Optionally, the second elastic body 33 may be, but is not limited to, a spring, a rubber strip, a shape memory alloy component, or the like. Furthermore, by selecting second elastic bodies 33 with different elastic coefficients or adjusting a preload of the second elastic body 33, different switching sensitivities of the second valve 30 may be set, thus improving the applicability.

The above technical solution provides a preset force to the second core portion 32 by arranging the second elastic body 33. This not only simplifies the structure and helps reduce the manufacturing cost of the second valve 30, but also allows for flexible adjustment of the shape, size, and material of the second elastic body 33 according to different application environments and requirements, thereby being conducive to improving the design flexibility and applicability of the second valve 30.

In some embodiments, the second elastic body 33 is arranged on a side of the second core portion 32 close to the fourth port 312.

For example, the second elastic body 33 applies a force to the second core portion 32 in the direction away from the fourth port 312 through its own elastic deformation. When the second elastic body 33 is arranged on the side of the second core portion 32 close to the fourth port 312, the second elastic body 33 will always be in a compressed state to provide a thrust to the second core portion 32.

As such, compression of the second elastic body 33 makes a volume of the second elastic body 33 relatively small, thus being capable of reducing an occupancy rate of the second elastic body 33 for an internal space in the second valve 30. Therefore, it is capable of freeing up more space within the second valve 30 for functions such as conveying an electrolyte solution or gas during the processing of battery cell 7, thereby improving the production efficiency of the battery cell 7.

In some embodiments, the second valve 30 further includes an anti-slip member 34, where the anti-slip member 34 is connected to the part of the second core portion 32 that extends out of the shell 10.

For example, the function of the second core portion 32 located in the external space of the shell 10 is to facilitate the operator or device to grasp the second core portion 32 to apply a tensile force to it. The anti-slip member 34 may be detachably connected to the second core portion 32, or it may be integrally arranged on the second core portion 32. The anti-slip member 34 is capable of improving a friction coefficient of the part of the second core portion 32 that protrudes from the shell 10, thereby reducing the risk of slippage after the operator or device grasps the second core portion 32.

The anti-slip member 34 may be directly connected to the second core portion 32, or it may be restricted to the second core portion 32 by another component. As an example, the connection between the anti-slip member 34 and the second core portion 32 may be, but is not limited to, bolt connection, welding, riveting, snap-fit, or the like.

As an example, the anti-slip member 34 may be a concave-convex structure provided on the outer surface of the second core portion 32. The anti-slip member 34 may also be an anti-slip pad or an anti-slip coating provided on the outer surface of the second core portion 32.

Optionally, the anti-slip member 34 may be, but is not limited to, made of a material such as rubber, polyvinyl chloride, or polyurethane.

The above technical solution provides the anti-slip member 34, and the anti-slip member 34 is capable of improving a friction coefficient of the part of the second core portion 32 that protrudes from the shell 10, thereby reducing the risk of slippage after the operator or device grasps the second core portion 32, and thus improving the reliability of the second valve 30.

According to some embodiments of the present application, the present application further provides a battery, including the battery cell 7 in any one of the above solutions.

According to some embodiments of the present application, the present application further provides an electrical apparatus, including the battery cell 7 in any one of the above solutions, and the battery cell 7 is configured to provide electrical energy.

In order to better understand the battery cell 7 provided in the embodiments of the present application, based on the same inventive concept, an embodiment of the battery cell 7 in practical application is provided herein for explanation.

The embodiments of the present application provide a battery cell 7. The battery cell 7 includes a shell 10, a first valve 20, and a second valve 30. The first valve 20 and the second valve 30 are both arranged on the shell 10.

The shell 10 includes an end cover 10b and a case 10a. The case 10a is provided with an opening. The end cover 10b covers the opening, and the end cover 10b is provided with an exhaust vent 12. A liquid injection hole 11 is provided on a wall of the case 10a opposite to the end cover 10b. The first valve 20 is arranged at the liquid injection hole 11, and the second valve 30 is arranged at the exhaust vent 12.

The first valve 20 includes a first main body portion 21, a first core portion 22, and a first elastic body 23. The first main body portion 21 includes a first port 211 and a second port 212 that are in communication with each other, the first port 211 is in communication with the external space, and the second port 212 is in communication with the internal space. The first core portion 22 is arranged in the first main body portion 21. The first elastic body 23 is connected to the first main body portion 21 and the first core portion 22, and the first elastic body 23 applies a force to the first core portion 22 in a direction close to the first port 211. The first core portion 22 is configured to be capable of opening when subjected to a pressure, so that the first port 211 and the second port 212 are in communication with each other, and be capable of isolating the first port 211 from the second port 212 when not subjected to any pressure.

The second valve 30 includes a second main body portion 31, a second core portion 32, and a second elastic body 33. The second main body portion 31 includes a third port 311 and a fourth port 312 that are in communication with each other, and the third port 311 is in communication with an internal space. The second core portion 32 is arranged in the second main body portion 31. A portion of the second core portion 32 passes through the fourth port 312 and extends out of the shell 10. The second core portion 32 is provided with a channel 321, and the channel 321 is in communication with the external space. The second elastic body 33 is connected to the second main body portion 31 and the second core portion 32, and the second elastic body 33 applies a force to the second core portion 32 in a direction away from the fourth port 312. The second core portion 32 is configured to be capable of opening when subjected to a tensile force so that the third port 311 and the channel 321 are in communication with each other, and be capable of isolating the third port 311 from the channel 321 when not subjected to any tensile force.

The above technical solution of the present application is capable of opening the first valve 20 and/or the second valve 30 when the battery cell 7 is undergoing a processing step that requires communication between the internal space of the shell 10 and the external space of the shell 10 to complete a relevant operation, so as to provide an operating condition for the processing step of the battery cell 7; and closing the first valve 20 and/or the second valve 30 when the battery cell 7 is not being processed or when the battery cell is undergoing a processing step that does not require communication between the internal space of the shell 10 and the external space of the shell 10 to complete a relevant operation, so as to isolate the internal space of the battery cell 7 from interaction with the external environment, effectively reduce the impact of the external environment on an internal structure and component of the battery cell 7 caused by the interaction between the external environment and the internal space of the shell 10 through the liquid injection hole 11 and the exhaust vent 12, thereby helping improve the production quality. At the same time, since the impact of the external environment on the battery cell 7 in the production process is reduced, control standards for the external environment can be lowered or the control of the external environment can be eliminated, which helps reduce the production costs.

Furthermore, structures of the first valve 20 and the second valve 30 can be designed differently according to different structures of the liquid injection hole 11 and the exhaust vent 12, so as to better meet process requirements of liquid injection and venting, thereby being conducive to further improving the production quality.

It should be noted that, without conflict, embodiments in the present application and features in the embodiments may be combined together.

Finally, it should be noted that all the above embodiments are only used for explaining, rather than limiting, the technical solution of the present application. Although the present application has been described in detail with reference to all the above embodiments, it should understand by those of ordinary skill in the art that the technical solutions described in the above embodiments can still be modified, or some or all of the technical features thereof can be equivalently replaced. The modifications or replacements do not deviate the nature of the corresponding technical solutions from the scope of the embodiments of the present application, and should all be included in the scope of the claims and specification of the present application. In particular, the technical features mentioned in the various embodiments can be combined in any manner as long as there is no structural conflict. The present application is not limited to the specific embodiments disclosed herein, but rather includes all technical solutions falling within the scope of the claims.

## Claims

1. A battery cell, comprising:
a shell provided with a liquid injection hole and an exhaust vent; and
a first valve and a second valve, wherein one of the first valve and the second valve is arranged at the liquid injection hole, the other of the first valve and the second valve is arranged at the exhaust vent, both of the first valve and the second valve are configured to be capable of switching between connecting and disconnecting an internal space of the shell and an external space of the shell.

2. The battery cell according to claim 1, wherein the shell comprises a first wall and a second wall, the exhaust vent is provided on the first wall, and the liquid injection hole is provided on the second wall.

3. The battery cell according to claim 2, wherein the first wall and the second wall are arranged opposite to each other.

4. The battery cell according to claim 2, wherein the shell comprises an end cover and a case, the case is provided with an opening, the end cover covers the opening, and the end cover is configured as the first wall; and
the case comprises the second wall, wherein the second wall is arranged opposite to the end cover.

5. The battery cell according to any one of claims 1 to 4, wherein the first valve comprises a first main body portion and a first core portion, the first main body portion comprising a first port and a second port that are in communication with each other, the first port being in communication with the external space, and the second port being in communication with the internal space; and
the first core portion is arranged in the first main body portion, and the first core portion is configured to be capable of opening when subjected to a pressure, so that the first port and the second port are in communication with each other, and be capable of isolating the first port from the second port when not subjected to any pressure.

6. The battery cell according to claim 5, wherein the first valve further comprises a first elastic body, the first elastic body connects the first main body portion and the first core portion, and the first elastic body applies a force to the first core portion in a direction close to the first port.

7. The battery cell according to claim 6, wherein the first elastic body is arranged on a side of the first core portion facing away from the first port.

8. The battery cell according to claim 5, wherein the first main body portion further comprises a cavity, and the cavity is in communication with the first port and the second port; and
the first core portion comprises a body and a protruding portion connected to each other, the protruding portion protrudes from a surface of a side of the body near the first port, the body is arranged in the cavity, the surface of the side of the body near the first port abuts against the first main body portion, and at least a portion of the protruding portion is accommodated in the first port.

9. The battery cell according to any one of claims 1 to 8, wherein the second valve comprises a second main body portion and a second core portion, the second main body portion comprising a third port and a fourth port that are in communication with each other, and the third port being in communication with the internal space; and
the second core portion is arranged in the second main body portion, a portion of the second core portion passes through the fourth port and extends out of the shell, the second core portion is provided with a channel, the channel is in communication with the external space, and the second core portion is configured to be capable of opening when subjected to a tensile force so that the third port and the channel are in communication with each other, and be capable of isolating the third port from the channel when not subjected to any tensile force.

10. The battery cell according to claim 9, wherein the second valve further comprises a second elastic body, the second elastic body connects the second main body portion and the second core portion, and the second elastic body applies a force to the second core portion in a direction away from the fourth port.

11. The battery cell according to claim 10, wherein the second elastic body is arranged on a side of the second core portion close to the fourth port.

12. The battery cell according to claim 9, wherein the second valve further comprises an anti-slip member, and the anti-slip member is connected to the part of the second core portion that extends out of the shell.

13. A battery, comprising the battery cell according to any one of claims 1 to 12.

14. An electrical apparatus, comprising the battery cell according to any one of claims 1 to 12, wherein the battery cell is configured to provide electric energy.
